# FASCICULE DE BREVET EUROPEEN

(11) **EP 1 805 971 B1**
(45) Date de publication et mention de la délivrance du brevet: **10.03.2010**
(21) Numéro de dépôt: 05800294.0
(22) Date de dépôt: 23.09.2005
(51) Int. Cl.: H04L 29/12

(54) **ROUTEUR, POUR UN RESEAU DE COMMUNICATIONS IP, ADAPTE A LA DETERMINATION DE CARACTERISTIQUE(S) DE CONFIGURATION ADAPTATIVE(S) POUR DES ROUTEURS VOISINS**
FÜR DIE BESTIMMUNG VON KONFIGURATIONSEIGENSCHAFTEN, ADAPTIV FÜR BENACHBARTE ROUTER, AUSGELEGTER ROUTER FÜR EIN IP-KOMMUNIKATIONSNETZ
ROUTER FOR AN IP COMMUNICATION NETWORK ADAPTED TO THE DETERMINATION OF CONFIGURATION CHARACTERISTICS ADAPTIVE FOR NEIGHBOURING ROUTERS

(30) Priorité: 20.10.2004 FR 0411183
(43) Date de publication de la demande: 11.07.2007
(73) Titulaire: Alcatel Lucent, 75008 Paris (FR)
(72) Inventeur: CLEVY, Laurent, F-28000 CHARTRES (FR); GALAND, Damien, F-92370 CHAVILLE (FR)
(74) Mandataire: Thibaud, Jean-Baptiste
(86) Numéro de dépôt international: PCT/FR2005/050776
(87) Numéro de publication internationale: WO 2006/042983

(56) Documents cités:
- US-A1- 2004 177 146
- US-B1- 6 553 423
- FAN Z: "IPv6 Stateless Address Autoconfiguration in Ad Hoc Networks" 25 septembre 2003 (2003-09-25), LECTURE NOTES IN COMPUTER SCIENCE, SPRINGER VERLAG, NEW YORK, NY, US, PAGE(S) 665-678 , XP002283701 ISSN: 0302-9743 page 667, alinéa 2.3 - page 669, alinéa 2.4 page 671, alinéa 3 - page 673

## Description

L'invention concerne le domaine des réseaux de communications à protocole Internet (ou IP), et plus précisément les routeurs de tels réseaux, chargés de déterminer au moins une caractéristique de configuration pour des routeurs dits «voisins », raccordés au(x) même(s) lien(s) qu'eux.

On entend ici par « caractéristique de configuration » toute caractéristique permettant de configurer un routeur IP afin qu'il puisse communiquer à l'aide d'une adresse IPv6 dite globale, par exemple de la forme 2000 ::/3 (où «/3» désigne 3 bits de gauche significatifs (de valeur 001) et ou « :: » représente une suite de zéros).

Parmi ces caractéristiques de configuration on peut notamment citer tout ou partie d'un identifiant de réseau, ou une portion d'un identifiant de nommage, ou une caractéristique de routage, ou une caractéristique de passerelle, ou une capacité de commutation (taille de fond de panier), ou encore un nombre et une taille de ports de communication.

Dans les réseaux IP, les routeurs disposent d'interfaces de communication raccordées à des liens et joignables par des adresses IP différentes une fois qu'elles ont été configurées.

Comme le sait l'homme de l'art, chaque adresse IPv6 est constituée d'un identifiant de réseau (généralement défini par 64 bits) et d'un identifiant d'interface (généralement défini par 64 bits).

Les identifiants d'interface sont destinés à permettre la différenciation des interfaces sur un même lien local. Chaque identifiant d'interface d'un routeur est habituellement déterminé par le routeur lui même au moyen de son adresse MAC, lorsqu'il est mis en fonctionnement, qu'il soit ou non raccordé au réseau.

Les identifiants de réseau sont destinés à permettre les communications directes (ou locales) entre routeurs. Ils sont constitués à partir d'un préfixe réseau (noté « /n »), défini, par exemple, par les 48 bits de gauche de poids les plus forts (noté dans ce cas, de façon abrégée, « /48 » (n=48)) et définissant une famille d'adresses. Un préfixe sert en fait de « préserve » pour générer des identifiant de réseau. Par exemple, le préfixe de type /48 2001 :1234 :5678 :: peut permettre de définir les identifiants de réseau 2001:1234:5678:1::, 2001 :1234 :5678:2 ::, 2001 :1234 :5678 :3 ::, jusqu'à 2001 :1234 :5678 :ffff ::. Dans cet exemple, « :: » représente une suite de zéros (0) successifs (par exemple, 2001 :1234 :5678 :1 :: est équivalent à 2001 :1234 :5678 :0001 :0000 :0000 :0000 :0000).

Le préfixe réseau /n est fourni par le réseau (généralement par un serveur de préfixes réseau) et représente habituellement 2⁽⁶⁴⁻ⁿ⁾ identifiants de réseau différents.

US2004177146-A1 décrit un système de gestion des adresses réseau dans lequel un routeur alloue des adresses IPv6 à des appareils de communication en évitant les collisions d'adresses.

FAN Z: "IPv6 Stateless Address Autoconfiguration in Ad Hoc Networks" 25 septembre 2003 (2003-09-25), LECTURE NOTES IN COMPUTER SCIENCE, SPRINGER VERLAG, NEW YORK, NY, US, PAGE(S) 665-678 , XP002283701 ISSN: 0302-9743 page 667, alinéa 2.3 - page 669, alinéa 2.4 page 671, alinéa 3 - page 673 décrit un procédé d'auto-configuration d'adresse IPv6 dans un réseau ad hoc.

US6553423 décrit un routeur capable d'envoyer un message BGP comportant un paramètre de capacité dynamique à un routeur voisin pair pour annoncer une nouvelle capacité ou modifier ou supprimer une capacité annoncée précédemment.

EP 1322068 décrit un système de gestion de réseau capable de communiquer avec des routeurs pour collecter des données de configuration de ces routeurs, notamment des adresses IP allouées aux interfaces de ces routeurs.

Dans les réseaux IPv6 dits à auto-configuration d'adresses sans état (ou « stateless address auto-configuration », définie par les normes RFC 2461 et RFC 2462 de l'IETF), chaque routeur est agencé de manière à fournir un identifiant de réseau à chaque terminal connecté à ses interfaces, grâce à un mécanisme appelé RA/RS (pour « Router Advertisement/Router Sollicitation» - signalement de routeur/sollcitation de routeur).

Pour ce faire, le routeur doit tout d'abord obtenir un préfixe réseau qui lui servira de ressource pour élaborer des identifiants de réseau pour les terminaux qui sont raccordés à ses interfaces. Pour obtenir un préfixe (réseau), un routeur peut faire appel à ce que l'homme de l'art appelle la « délégation de préfixes ».

Ce mécanisme consiste tout d'abord à attribuer un préfixe (réseau), généralement de type /48, à un unique routeur, dit « routeur racine », de sorte qu'il dispose d'un espace d'adressage représenté par un préfixe réseau global qu'il peut « découper » en (sous-)préfixes de plus grande longueur (par exemple /51) et mettre à la disposition d'autres routeurs « aval » raccordés via des liens à ses propres interfaces. Chaque routeur aval peut alors à son tour découper en (sous-)préfixes d'encore plus grande longueur (par exemple /54) le (sous-)préfixe qui lui a été attribué par le routeur racine (« amont »), afin de les mettre à la disposition d'autres routeurs aval raccordés via des liens à ses propres interfaces, et ainsi de suite, de manière à constituer progressivement un arbre dit « de délégation hiérarchique ».

Dans les réseaux actuels, la politique de découpage des (sous-)préfixes est arbitraire. Plus précisément, chaque (sous-)préfixe ne peut être découpé qu'en huit préfixes (8 = 2³, car 51 - 48 = 54 - 51 = 3, par exemple), ou en d'autres termes la longueur d'un sous-préfixe est systématiquement augmentée de trois bits par rapport à la longueur du (sous-)préfixe dont il est issu (par exemple, un préfixe /48 est découpé en huit sous-préfixes /51).

En raison de ce découpage statique et arbitraire, un routeur ne peut attribuer des préfixes réseau (par délégation) qu'à un nombre invariant (égal à huit) de routeurs voisins, quel que soit le nombre total de ses routeurs voisins et quel que soit le nombre réel d'interfaces que comporte chacun de ses routeurs voisins.

Ce défaut d'adaptabilité, qui résulte du fait que les routeurs ne connaissent pas certaines au moins des caractéristiques de configuration de leurs routeurs voisins, peut s'avérer particulièrement gênant dans certaines situations.

L'invention a donc notamment pour but de remédier à l'inconvénient induit par la politique arbitraire de découpage des préfixes réseau en sous-préfixes, et d'une manière générale de permettre aux routeurs, des réseaux IP à auto-configuration d'adresses, de déterminer au moins une caractéristique de configuration, comme par exemple un préfixe réseau, pour leurs routeurs voisins qui le requièrent

Elle propose à cet effet un routeur, pour un réseau IP à auto-configuration d'adresses, comportant au moins une interface de communication, destinée à être associée à un identifiant de réseau, et des moyens de gestion chargés de déterminer au moins une caractéristique de configuration pour certains au moins des routeurs voisins, dont l'une des interfaces de communication est raccordée via un lien à l'une des siennes.

Ce routeur IP se caractérise par le fait, d'une part, qu'il comprend des moyens de traitement chargés de déterminer (ou obtenir) un profil de caractéristiques techniques de chaque routeur voisin, et d'autre part, que ses moyens de gestion sont chargés de déterminer pour chaque routeur voisin qui le requiert une caractéristique de configuration qui est adaptée à son profil (déterminé par les moyens de traitement), compte tenu des profils déterminés des autres routeurs voisins.

Le routeur selon l'invention peut comporter des caractéristiques complémentaires qui peuvent être prises séparément ou en combinaison, et notamment :
- ses moyens de traitement peuvent être chargés de déterminer les profils des routeurs voisins en générant à destination de ces derniers des messages leur demandant de transmettre leurs profils respectifs. Dans ce cas, les moyens de traitement sont par exemple chargés de définir les messages conformément au protocole ICMP (« Internet Control Message Protoool»),
- des moyens d'extraction chargés de déterminer, dans le routeur, le profil qui est destiné aux routeurs voisins,
- ses moyens de traitement peuvent être chargés de transmettre spontanément, à destination des routeurs voisins, des messages comportant leur profil déterminé par leurs propres moyens d'extraction,
- en variante, ses moyens de traitement peuvent être chargés de transmettre à destination d'un routeur voisin, consécutivement à la réception d'un message de demande de transmission de profil provenant de celui-ci, un message comportant le profil déterminé par ses moyens d'extraction,
- ses moyens de traitement peuvent être agencés pour définir les messages à transmettre conformément au protocole ICMP,
- la caractéristique de configuration peut être notamment un préfixe réseau, ou au moins une portion d'un identifiant de nommage, ou une caractéristique de routage, ou encore une caractéristique de passerelle,
- ses moyens de traitement peuvent être chargés de déterminer (ou obtenir), pour chaque routeur voisin, un profil comportant au moins le nombre d'interfaces de communication qu'il comporte, et ses moyens de gestion peuvent être chargés de déterminer pour chaque routeur voisin qui le requiert une caractéristique de configuration représentant un préfixe réseau de taille adaptée à son profil, compte tenu des profils déterminés des autres routeurs voisins. Dans ce cas, les moyens de traitement sont par exemple chargés de déterminer des profils de routeurs voisins qui comportent en outre au moins une autre caractéristique technique que le nombre d'interfaces, comme par exemple la capacité de la matrice de commutation du routeur voisin et/ou le débit de l'interface que comporte le routeur voisin et qui est raccordée au même lien qu'une interface de son routeur et/ou la liste d'au moins les préfixes réseau qui ont déjà été attribués à chacune des interfaces du routeur voisin.

L'invention est particulièrement bien adaptée, bien que de façon non exclusive aux réseaux de type IPv6 (IP version n°6).

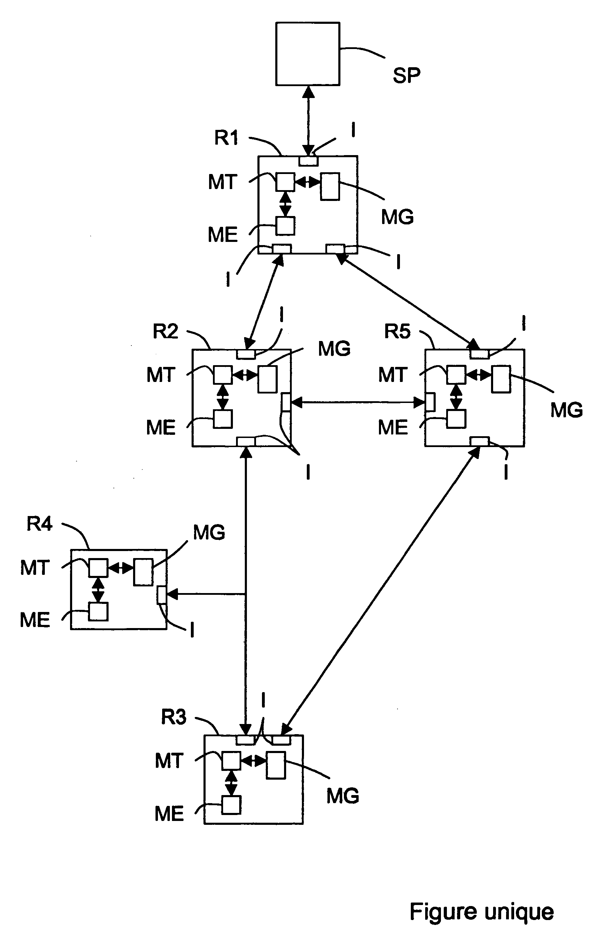

D'autres caractéristiques et avantages de l'invention apparaîtront à l'examen de la description détaillée ci-après, et du dessin annexé, sur lequel l'unique figure illustre de façon schématique un exemple de liens locaux d'un réseau IP auxquels sont raccordés des routeurs IP selon l'invention. Le dessin annexé pourra non seulement servir à compléter l'invention, mais aussi contribuer à sa définition, le cas échéant. L'invention a pour objet de permettre la détermination d'au moins une caractéristique de configuration de routeur au sein d'un réseau IP dit à délégation de préfixes ou auto-configuration d'adresses (ou « address auto-configuration », définie par les normes RFC 2461 et RFC 2462 de l'IETF).

Un réseau IP peut être de façon très schématique, mais néanmoins suffisante à la compréhension de l'invention, assimilé à des groupes interconnectés de routeurs Ri couplés les uns aux autres de manière à communiquer entre eux via des liens locaux L auxquels sont raccordées leurs interfaces de communication I une fois qu'elles ont été configurées à cet effet

On entend ici par « lien local » une voie de communication, comme par exemple un lien ethemet, à laquelle sont raccordés des routeurs Ri, constituant un ensemble, par l'une de leurs interfaces de communication I. Dans l'exemple illustré sur l'unique figure, l'indice i est compris entre 1 et 5, mais il peut prendre n'importe quelle valeur supérieure ou égale à deux (2).

Par ailleurs, on considère dans ce qui suit, à titre d'exemple non limitatif, que le réseau IP est de type IPv6. Par conséquent, on entend ci-après par « adresse IP » une adresse IPv6 de 128 bits constituée d'un identifiant de réseau (occupant les 64 bits les plus à gauche) et d'un identifiant d'interface (occupant les 64 bits les plus à droite).

Comme indiqué dans la partie introductive, les identifiants d'interface sont déterminés par chaque routeur, pour ses propres interfaces I, au moyen de leurs adresses MAC. Ils permettent ainsi de différencier les interfaces 1 des différents routeurs, raccordées à un même lien (local). Par ailleurs, les identifiants de réseau sont constitués à partir d'un préfixe réseau global de configuration occupant, par exemple, les 48 bits de poids les plus forts (noté /48). Ce préfixe réseau global est fourni par un serveur de préfixes SP à l'un des routeurs Ri, dit « routeur racine » (ou « root router »). II définit une famille d'adresses pour tous les routeurs voisins du routeur racine et pour tous les autres routeurs appartenant au final à un même arbre de délégation hiérarchique.

II est rappelé qu'un préfixe (réseau) sert de ressource à un routeur Ri pour élaborer des identifiants de réseau pour les terminaux qui sont raccordés à ses interfaces.

On considère dans ce qui suit que le serveur SP et les routeurs Ri sont tous agencés de manière à utiliser un protocole de configuration d'hôte par délégation de préfixes hiérarchisée ou HPD (pour « Hierarchical Prefix Délégation ») en utilisant le protocole ICMP, de préférence dans sa version IPv6. Cette délégation est notamment décrite dans le document « draft-bykim-ipv6-hpd-01.txt », ETRI, 15 février 2004, accessible à l'adresse Internet http:/ietfreport.isoc.org/all-ids/draft-bykim-ipv6-hpd-01.txt. Par ailleurs, la version IPv6 du protocole ICMP (ICMPv6) est définie par la norme RFC 2643 de l'IETF.

Mais, dans une variante, ils pourraient utiliser une version améliorée du protocole de configuration d'hôte dynamique DHCP (pour « Dynamic Host Configuration Protocol ») dans sa version pour IPv6 (DHCPv6), définie par la norme IETF référencée RFC-3315. Par ailleurs, dans ce qui suit, on considère, à titre d'exemple non limitatif, que chaque routeur Ri du réseau est agencé de manière à déterminer des préfixes (réseau) pour ses routeurs voisins, ces derniers pouvant ensuite les utiliser pour générer leurs propres identifiant de réseau. Mais, l'invention n'est pas limitée à la détermination de ce type de caractéristique de configuration. Elle concerne en effet toute caractéristique permettant de configurer un routeur IP afin qu'il puisse communiquer, comme par exemple une portion d'un identifiant de nommage (ou « naming »), ou une caractéristique de routage (ou « self-configuration of routing »), ou encore une caractéristique de passerelle (ou « gatewaying »).

On entend ici par « préfixe réseau » (ou « network prefix ») un sous-préfixe, attribué par un routeur choisi à cet effet, dit « routeur de délégation de préfixe » (ou plus simplement « routeur délégué »), à un routeur Ri qui le requiert, dit « routeur requérant », afin qu'il puisse définir à partir de ce sous-préfixe des identifiants de réseau permettant de différencier les terminaux qui sont raccordés à ses interfaces de communication 1, et résultant du découpage par ledit routeur délégué de son propre (sous-)préfixe.

L'échange de messages entre des routeurs requérants et un routeur délégué, permettant d'aboutir à l'attribution de préfixes (réseau) « découpés », s'effectue par exemple au moyen de la technique appelée délégation de préfixes hiérarchisée ou HPD précitée.

Chaque routeur Ri du réseau peut agir comme délégué pour l'attribution de (sous-)préfixes (découpés) à certains routeurs voisins Ri' et comme requérant auprès d'un routeur délégué pour se faire attribuer un sous-)préfixe (découpé), qu'il peut ensuite éventuellement découper pour les besoins d'autres routeurs requérants.

A cet effet, comme illustré sur l'unique figure, chaque routeur Ri comporte au moins un module de traitement MT, chargé de déterminer (ou obtenir) un profil de caractéristiques techniques pour chaque routeur voisin Ri', et un module de gestion MG, chargé de déterminer une caractéristique de configuration (ici un préfixe) adaptée à chaque profil de routeur voisin Ri' qui en fait la demande, déterminé par le module de traitement MT, compte tenu des profils des autres routeurs voisins Ri', également déterminés par le module de traitement MT.

La détermination d'un profil de routeur voisin Ri' par le module de traitement MT d'un autre routeur Ri ne consiste pas à définir ledit profil. Elle consiste à collecter ce profil transmis par ledit routeur voisin Ri', sous la forme d'un message, soit spontanément, soit consécutivement à la réception d'un message d'interrogation transmis par le routeur délégué Ri et réclamant au routeur requérant Ri' la transmission de son profil.

Ces différents messages (de transmission et d'interrogation) peuvent par exemple être générés par le module de traitement MT (du routeur requérant ou du routeur délégué) conformément au protocole ICMP (« Internet Control Message Protocol »).

Par exemple la transmission d'un profil à un routeur délégué Ri peut se faire sous la forme d'une structure de données d'un type similaire à celui connu sous l'acronyme TLV (« Tag, Lenght, Value » - Identificateur, Longueur, Information), et que le module de traitement MT intègre dans le champ de données d'un message ICMP.

Si la caractéristique de configuration qui doit être déterminée par le module de gestion MG d'un routeur délégué Ri est un préfixe réseau pour un routeur requérant Ri', alors le profil du routeur requérant Ri', qui sert à la détermination dudit préfixe (réseau), est transmis à l'initiative du module de traitement MT de ce routeur requérant Ri' et comporte au moins le nombre de ses interfaces de communication 1.

Dans ce cas, le module de gestion MG d'un routeur délégué, par exemple R1, détermine pour chaque routeur voisin qui le requiert, par exemple R2 ou R5, une taille de préfixe réseau (en terme de nombre de bits) adaptée à son profil (déterminé par le module de traitement MT), compte tenu des profils déterminés des autres routeurs voisins (R5 ou R2), puis il définit un préfixe réseau correspondant à cette taille à partir de son propre préfixe (réseau).

En d'autres termes, le module de gestion MG du routeur délégué Ri détermine le nombre maximal de bits de préfixe qu'il va devoir ajouter à son propre préfixe afin de permettre à chaque routeur requérant Ri' de définir à partir des préfixes déterminés des identifiants de réseau.

Le nombre de bits attribués par le module de gestion MG pouvant varier d'un routeur requérant à l'autre, on optimise ainsi la répartition des bits de préfixe (réseau), disponibles au niveau de chaque routeur délégué Ri, entre les routeurs requérants Ri' qui en ont besoin, et compte tenu de leurs besoins respectifs.

Afin d'optimiser encore plus la détermination du nombre de bits de préfixe (réseau) attribué à chaque routeur requérant Ri', le module de gestion MG peut utiliser un ou plusieurs paramètres (représentatifs de caractéristiques techniques des routeurs) en complément de leur nombre d'interfaces 1. Parmi ces paramètres complémentaires, on peut notamment citer la capacité de la matrice de commutation d'un routeur voisin requérant Ri', le débit de l'interface I que comporte le routeur voisin requérant Ri' et qui est raccordée au même lien qu'une interface I du routeur délégué Ri, et la liste des préfixes réseau qui ont déjà été attribués à chacune des interfaces I d'un routeur voisin.

Afin que chaque routeur Ri puisse déterminer son propre profil (qu'il doit transmettre à son routeur délégué), il peut comporter, comme illustré sur l'unique figure, un module d'extraction ME couplé à son module de traitement MT. Ce module d'extraction ME est par exemple chargé de déterminer à l'aide de règles configurées statiquement chaque caractéristique technique constituant son profil, puis de les communiquer au module de traitement MT afin qu'il les transmette à son routeur délégué.

On va maintenant décrire un exemple d'utilisation de l'invention dans le cadre de l'exemple illustré sur l'unique figure. On considère dans cet exemple que le routeur R1 (routeur racine) a reçu du serveur de préfixes SP le préfixe (réseau) global /48, et dispose de l'adresse IP 2001 :db8 :1 :0000 ::0/48.

Les routeurs R2 à R5 souhaitant que des identifiants de réseau soient attribués à leurs interfaces I respectives, ils transmettent à destination de tous leurs routeurs voisins des demandes de délégation (ou « delegator queries »). Le routeur R1 étant ici le seul à disposer initialement d'un préfixe réseau, il est donc le seul à pouvoir répondre à ses routeurs voisins R2 et R5 qu'il peut être leur délégué (ou « prefix delegator »).

Les routeurs R2 et R5 connaissant leur routeur délégué (R1), ils lui transmettent alors chacun une requête d'obtention de préfixe.

En mode de fonctionnement automatique, chaque requête d'obtention de préfixe peut comporter le profil du routeur requérant. Dans une variante de fonctionnement, lorsqu'un routeur délégué reçoit une requête d'obtention de préfixe d'un routeur voisin, son module de traitement MT peut transmettre aux routeurs voisins des demandes de transmission de profil.

Une fois que le module de traitement MT du routeur délégué dispose des profils des routeurs voisins, il les communique à son module de gestion MG afin qu'il détermine chaque taille de préfixe réseau qui est adaptée à chaque routeur voisin requérant compte tenu de leurs profils respectifs.

Par exemple, le module de gestion MG du routeur R1 détermine une première taille de préfixe pour le routeur requérant R2 et une seconde taille de préfixe pour le routeur requérant R5. II définit alors deux préfixes (réseau), correspondant respectivement aux première et seconde tailles, à partir de son propre préfixe (réseau), puis il fait transmettre ces deux préfixes (réseau) par le routeur R1 aux deux routeurs R2 et R5, qui disposent alors, par exemple, des préfixes (réseau) IP 2001 :db8 :1 :2000 ::0/51 et IP 2001 :db8 :1 :4000 ::0/51 pour définir des identifiants réseaux, puis configurer leurs interfaces 1.

Les routeurs R2 et R5 sont alors en mesure d'assurer leur rôle de délégué respectivement pour les routeurs R4 et R3. IIs leur signalent au moyen d'un message de réponse. Les routeurs R4 et R3 connaissant désormais leurs routeurs délégués respectifs (R2 et R5), ils leurs transmettent alors chacun une requête d'obtention de préfixe.

Une fois que le module de gestion MG du routeur R2 dispose des profils de ses routeurs voisins, il détermine une taille de préfixe pour le routeur requérant R4, puis définit à partir de son propre préfixe (réseau) un sous-préfixe, correspondant à la taille déterminée, qu'il lui fait transmettre. De même, une fois que le module de gestion MG du routeur R5 dispose des profils de ses routeurs voisins, il détermine une taille de préfixe (réseau) pour le routeur requérant R3, puis définit à partir de son propre préfixe (réseau) un sous-préfixe, correspondant à la taille déterminée, qu'il lui fait transmettre. Les deux routeurs R4 et R3 disposent alors respectivement, par exemple, des préfixes (réseau) IP 2001 :db8 :1 :2400 ::0/54 et IP 2001 :db8 :1 :4400 ::0/54 pour définir des identifiants réseaux.

Chaque module de traitement MT, chaque module de gestion MG, et chaque module d'extraction ME d'un routeur selon l'invention, peut être réalisé sous la forme de circuits électroniques, de modules logiciels (ou informatiques), ou d'une combinaison de circuits et de logiciels.

L'invention ne se limite pas aux modes de réalisation de routeur décrits ci-avant, seulement à titre d'exemple, mais elle englobe toutes les variantes que pourra envisager l'homme de l'art dans le cadre des revendications ci-après.

Ainsi, dans ce qui précède on a décrit une application de l'invention à la détermination de (sous-)préfixes découpés adaptatifs pour des interfaces de routeurs voisins. Mais, l'invention n'est pas limitée à la détermination de ce type de caractéristique de configuration. Elle concerne toute caractéristique permettant de configurer un routeur IP afin qu'il puisse communiquer, et notamment une portion d'identifiant de nommage, ou une caractéristique de routage, ou encore une caractéristique de passerelle.

Par ailleurs, dans ce qui précède on a décrit une application de invention à la détermination d'une seule caractéristique de configuration. Mais, on peut envisager que les moyens permettant la mise en oeuvre de l'invention soient agencés de manière à permettre la détermination de plusieurs (au moins deux) caractéristiques de configuration.

## Revendications

1. Routeur (Ri) pour un réseau de communications à protocole Internet et à auto-configuration d'adresses, ledit routeur (Ri) comportant au moins une interface de communication (I), destinée à être associée à un identifiant de réseau, et des moyens de gestion (MG) propres à déterminer au moins une caractéristique de configuration représentant un préfixe réseau pour d'autres routeurs (Ri'), dits voisins, disposant d'au moins une interface de communication raccordée via un lien à l'une des interfaces de communication (I) dudit routeur (Ri), **caractérisé en ce que** ledit routeur (Ri) comprend des moyens de traitement (MT) agencés pour déterminer, pour chaque routeur voisin (Ri'), un profil de caractéristiques techniques comportant au moins un nombre d'interfaces de communication dudit routeur voisin, et **en ce que** lesdits moyens de gestion (MG) sont propres à déterminer, pour au moins un routeur voisin (Ri') requérant un préfixe réseau, une caractéristique de configuration représentant un préfixe réseau de taille adaptée au profil dudit routeur voisin (Ri'), déterminé par lesdits moyens de traitement (MT), compte tenu des profils déterminés des autres routeurs voisins (Ri').

2. Routeur selon la revendication 1, **caractérisé en ce que** lesdits moyens de traitement (MT) sont agencés pour déterminer lesdits profils des routeurs voisins en générant à destination de ces derniers des messages leur demandant de transmettre leurs profils respectifs.

3. Routeur selon la revendication 2, **caractérisé en ce que** lesdits moyens de traitement (MT) sont agencés pour définir lesdits messages conformément au protocole ICMP.

4. Routeur selon l'une des revendications 1 à 3, **caractérisé en ce que** lesdits moyens de gestion (MG) sont propres à déterminer aussi, pour au moins un routeur voisin, une caractéristique de configuration choisie dans un groupe comprenant une portion d'un identifiant de nommage, une caractéristique de routage, et une caractéristique de passerelle.

5. Routeur selon l'une des revendications 1 à 4, **caractérisé en ce que** lesdits moyens de traitement (MT) sont agencés pour déterminer des profils de routeurs voisins comportant en outre au moins une caractéristique technique choisie dans un groupe comprenant la capacité de la matrice de commutation du routeur voisin , le débit de l'interface que comporte le routeur voisin et qui est raccordée à l'une de ses interfaces et une liste d'au moins lesdits préfixes réseau déjà attribués à chacune des interfaces du routeur voisin.

6. Routeur selon l'une des revendications 1 à 5, **caractérisé en ce qu'**il est de type IPv6.

7. Dispositif de communication (Ri') pour un réseau de communications à protocole Internet et à auto-configuration d'adresses, ledit dispositif (Ri') comportant au moins une interface de communication (I) raccordée via un lien à une interface de communication (I) d'un routeur de délégation de préfixe (Ri) et destinée à être associée à un identifiant de réseau, ledit dispositif comportant des moyens de traitement (MT) agencés pour transmettre au moins un message de requête d'obtention de préfixe à destination du routeur de délégation de préfixe, **caractérisé en ce que** ledit dispositif de communication est un routeur (Ri') qui comprend des moyens d'extraction (ME) agencés pour déterminer, en son sein, un profil de caractéristiques techniques comportant au moins un nombre d'interfaces de communication dudit routeur, ledit message de requête d'obtention de préfixe transmis à destination du routeur de délégation de préfixe contenant ledit profil.

8. Dispositif de communication (Ri') selon la revendication 7, **caractérisé en ce que** lesdits moyens de traitement (MT) sont agencés pour transmettre ledit profil spontanément.

9. Dispositif de communication (Ri') selon l'une des revendications 7 à 8, **caractérisé en ce que** lesdits moyens de traitement (MT) sont agencés pour définir ledit message à transmettre conformément au protocole ICMP.

10. Dispositif de communication (Ri') selon l'une des revendications 7 à 9, **caractérisé en ce qu'**il est de type IPv6.

11. Dispositif de communication (Ri') selon l'une des revendications 7 à 10, **caractérisé en ce que** ledit profil est transmis sous la forme d'une structure données de type Type, Length, Value.

## Claims

1. Router (Ri) for an Internet protocol and address auto-configuration communications network, said router (Ri) comprising at least one communication interface (I), intended to be associated with a network identifier, and management means (MG) able to determine at least one configuration characteristic representing a network prefix for other routers (Ri'), said to be neighboring, having at least one communication interface connected via a link to one of the communication interfaces (I) of said router (Ri), **characterized in that** said router (Ri) contains processing means (MT) configured to determine, for each neighboring router (Ri'), a technical characteristics profile comprising at least a number of communication interfaces of said neighboring router, and **in that** said management means (MG) are able to determine, for at least one neighboring router (Ri') requiring a network prefix, a configuration characteristic representing a network prefix of a size adapted to the profile of said neighboring router (Ri'), determined by said processing means (MT), bearing in mind the determined profiles of the other neighboring routers (Ri').

2. Router according to claim 1, **characterized in that** said processing means (MT) are configured to determine said profiles of the neighboring router by generating messages to these neighboring routers asking them to send their respective profiles.

3. Router according to claim 2, **characterized in that** said processing means (MT) are configured to define said messages in accordance with the ICMP protocol.

4. Router according to one of claims 1 to 3, **characterized in that** said management means (MG) are also able to determine, for at least one neighboring router, a configuration characteristic chosen from a group containing a portion of a naming identifier, a routing characteristic and a gateway characteristic.

5. Router according to one of claims 1 to 4, **characterized in that** said processing means (MT) are configured to determine profiles of neighboring routers which also comprise at least one technical characteristic chosen from a group including the capacity of the switching matrix of the neighboring router, the rate of the interface of the neighboring router and which is connected to one of its interfaces and a list of at least said network prefixes already assigned to each of the interfaces of the neighboring router.

6. Router according to one of claims 1 to 5, **characterized in that** it is of the type I Pv6.

7. Communication device (Ri') for an Internet protocol and address auto-configuration communications network, said device (Ri') comprising at least one communication interface (I) connected via a link to a communication interface (I) of a prefix delegation router (Ri) and intended to be associated with a network identifier, said device comprising processing means (MT) configured to send at least one prefix request message to the prefix delegation router, **characterized in that** said communication device is a router (Ri') which includes extraction means (ME) configured to determine, within said router, a technical characteristics profile comprising at least a number of communication interfaces of said router, said prefix request message sent to the prefix delegation router containing said profile.

8. Communication device (Ri') according to claim 7, **characterized in that** said processing means (MT) are configured to send said profile spontaneously.

9. Communication device (Ri') according to one of claims 7 to 8, **characterized in that** said processing means (MT) are configured to define said message to be sent in accordance with the ICMP protocol.

10. Communication device (Ri') according to one of claims 7 to 9, **characterized in that** it is of the type I Pv6.

11. Communication device (Ri') according to one of claims 7 to 10, **characterized in that** said profile is sent in the form of a Type, Length, Value type data structure.

## Patentansprüche

1. Router (Ri) für ein Kommunikationsnetz mit Internet-Protokoll und Autokonfiguration von Adressen, wobei der besagte Router (Ri) mindestens eine Kommunikationsschnittstelle (I), welche dazu bestimmt ist, mit einer Netzwerkkennung assoziiert zu werden, sowie Verwaltungsmittel (MG) zum Bestimmen von mindestens einer Konfigurationseigenschaft, welche ein Netzwerk-Präfix für weitere Router (Ri'), sogenannte Nachbar-Router, die über mindestens eine über einen Link an eine der Kommunikationsschnittstellen (I) des besagten Routers (Ri) angeschlossene Kommunikationsschnittstelle verfügen, darstellt, umfasst, **dadurch gekennzeichnet, dass** der besagte Router (Ri) Verarbeitungsmittel (MT) aufweist, welche dazu ausgelegt sind, für jeden benachbarten Router (Ri') ein Profil der technischen Eigenschaften, die zumindest eine Anzahl der Kommunikationsschnittstellen des besagten benachbarten Routers umfassen, zu bestimmen, und dass die besagten Verwaltungsmittel (MG) dazu ausgelegt sind, für zumindest einen benachbarten Router (Ri'), welcher ein Netzwerk-Präfix anfordert, eine Konfigurationseigenschaft zu bestimmen, die ein von den besagten Verarbeitungsmitteln (MT) unter Berücksichtigung der bestimmten Profile der anderen benachbarten Router (Ri') bestimmtes Netzwerk-Präfix mit einer dem Profil des besagten benachbarten Routers (Ri') angepassten Länge darstellt.

2. Router nach Anspruch 1, **dadurch gekennzeichnet, dass** die besagten Verarbeitungsmittel (MT) dazu ausgelegt sind, die besagten Profile der benachbarten Router zu bestimmen, indem sie für letztere Nachrichten erzeugen, in denen sie zur Übermittlung ihrer jeweiligen Profile aufgefordert werden.

3. Router nach Anspruch 2, **dadurch gekennzeichnet, dass** die besagten Verarbeitungsmittel (MT) dazu ausgelegt sind, die besagten Nachrichten gemäß dem ICMP-Protokoll zu definieren.

4. Router nach einem der Ansprüche 1 bis 3, **dadurch gekennzeichnet, dass** die besagten Verwaltungsmittel (MG) dazu ausgelegt sind, ebenfalls für zumindest einen benachbarten Router eine in einer Gruppe, welche einen Teil einer Namenskennung, eine Routing-Eigenschaft und eine Gateway-Eigenschaft umfasst, gewählte Konfigurationseigenschaft zu bestimmen.

5. Router nach einem der Ansprüche 1 bis 4, **dadurch gekennzeichnet, dass** die besagten Verarbeitungsmittel (MT) dazu ausgelegt sind, Profile von benachbarten Routern zu bestimmen, welche weiterhin mindestens eine technische Eigenschaft, gewählt in einer Gruppe bestehend aus der Kapazität der Schaltmatrix des benachbarten Routers, der Geschwindigkeit der Schnittstelle des benachbarten Routers, welche an eine seiner Schnittstellen angeschlossen ist, und einer Liste zumindest der besagten, einer jeden der Schnittstellen des benachbarten Routers schon zugewiesenen Netzwerk-Präfixe, umfassen.

6. Router nach einem der Ansprüche 1 bis 5, **dadurch gekennzeichnet, dass** er ein Router vom Typ IPv6 ist.

7. Kommunikationsvorrichtung (Ri') für ein Kommunikationsnetz mit Internet-Protokoll und Autokonfiguration von Adressen, wobei der besagte Router (Ri) mindestens eine Kommunikationsschnittstelle (I) aufweist, welche über einen Link an eine Kommunikationsschnittstelle (I) eines Präfixdelegations-Routers (Ri) angeschlossen und dazu bestimmt ist, mit einer Netzwerkkennung assoziiert zu werden, wobei die besagte Vorrichtung Verarbeitungsmittel (MT) umfasst, welche dazu ausgelegt sind, zumindest eine Nachricht zur Anforderung einer Präfixzuweisung an den Präfixdelegations-Router zu senden, **dadurch gekennzeichnet, dass** die besagte Kommunikationsvorrichtung ein Router (Ri') ist, der Extraktionsmittel (ME) umfasst, um selbst ein Profil von technischen Eigenschaften, welche zumindest eine Anzahl von Kommunikationsschnittstellen des besagten Routers umfassen, zu bestimmen, wobei die besagte an den Präfixdelegations-Router gesendete Nachricht zur Anforderung der Präfixzuweisung das besagte Profil enthält.

8. Kommunikationsvorrichtung (Ri') nach Anspruch 7, **dadurch gekennzeichnet, dass** die besagten Verarbeitungsmittel (MT) dazu ausgelegt sind, das besagte Profil spontan zu übertragen.

9. Kommunikationsvorrichtung (Ri') nach einem der Ansprüche 7 bis 8, **dadurch gekennzeichnet, dass** die besagten Verarbeitungsmittel (MT) dazu ausgelegt sind, die besagte zu übertragende Nachricht gemäß dem ICMP-Protokoll zu definieren.

10. Kommunikationsvorrichtung (Ri') nach einem der Ansprüche 7 bis 9, **dadurch gekennzeichnet, dass** sie vom Typ IPv6 ist.

11. Kommunikationsvorrichtung (Ri') nach einem der Ansprüche 7 bis 10, **dadurch gekennzeichnet, dass** das besagte Profil in der Form einer Datenstruktur vom Typ Art, Länge, Wert übertragen wird.
